(19) Europäisches Patentamt
European Patent Office
Office européen des brevets

(11) Numéro de publication : **0 297 990 B1**

(12) **FASCICULE DE BREVET EUROPEEN**

(45) Date de publication du fascicule du brevet :
**30.10.91 Bulletin 91/44**

(51) Int. Cl.⁵ : **F16L 9/12, H05F 3/02,**
    **B64D 45/02**

(21) Numéro de dépôt : **88401690.8**

(22) Date de dépôt : **30.06.88**

(54) **Tube pour la circulation d'un fluide inflammable, et tuyauterie réalisée à partir de tels tubes.**

(30) Priorité : **02.07.87 FR 8709403**

(43) Date de publication de la demande :
**04.01.89 Bulletin 89/01**

(45) Mention de la délivrance du brevet :
**30.10.91 Bulletin 91/44**

(84) Etats contractants désignés :
**DE ES GB IT NL SE**

(56) Documents cités :
**FR-A- 2 264 660**
**US-A- 1 516 422**
**US-A- 4 654 747**

(73) Titulaire : **AEROSPATIALE SOCIETE**
**NATIONALE INDUSTRIELLE**
**37, Boulevard de Montmorency**
**F-75016 Paris (FR)**

(72) Inventeur : **Hellard, Guy**
**1 Ter Avenue Frédéric Mistral**
**F-31700 Blagnac (FR)**
Inventeur : **Bedes, Amour**
**38 Chemin Barrieu**
**F-31700 Blagnac (FR)**

(74) Mandataire : **Bonnetat, Christian et al**
**CABINET BONNETAT 23, Rue de Léningrad**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un tube pour la circulation d'un fluide inflammable, ainsi qu'une tuyauterie réalisée à partir de tels tubes.

L'invention s'applique particulièrement, mais non exclusivement, aux tubes de circulation de carburant dans des aéronefs dont de nombreuses structures, comme les réservoirs, sont réalisées au moins partiellement en matériau composite isolant.

Or, lorsqu'un circuit de carburant métallique est installé dans une structure totalement ou partiellement isolante, comme par exemple un réservoir de carburant en matériau composite, et que celle-ci est foudroyée, un courant de foudre important risque de circuler dans la tuyauterie qui est meilleure conductrice de l'électricité que la structure environnante. Ce phénomène présente des risques importants à cause des échauffements ou des étincelages qui peuvent se produire aux différentes jonctions entre des éléments de tuyauterie, lors du passage du courant.

Par ailleurs, la tuyauterie du circuit de carburant doit satisfaire à deux exigences. La première est de résister aux efforts mécaniques produits par le carburant ou les déformées de la structure dans laquelle elle est montée. La seconde est d'évacuer l'électricité statique créée par la circulation du carburant — électriquement isolant — à grande vitesse dans la tuyauterie. Ces deux fonctions sont généralement assurées lorsque le tube est réalisé en métal, ce qui, en revanche, présente, comme on l'a vu précédemment, des risques dans le cas où l'aéronef est foudroyé.

Pour résoudre ce problème, le document US-A-4654747 propose de relier les tubes métalliques individuels d'une tuyauterie au moyen de raccords isolants. Pour pouvoir utiliser des tubes métalliques standard, il est indispensable que lesdits raccords isolants présentent une structure relativement complexe. Or, tant du point de vue de la fabrication que la maintenance, ce sont ces raccords qui constituent les pièces les plus délicates.

L'invention a pour but d'éviter les inconvénients mentionnés ci-dessus, et concerne un tube pour la circulation d'un fluide inflammable, comme du carburant, dont la conception permet d'empêcher les courants de foudre de circuler dans les tuyauteries réalisées à partir desdits tubes, tout en permettant de drainer l'électricité statique, engendrée par la circulation du carburant, vers les zones conductrices du réservoir, en respectant les contraintes mécaniques liées à la circulation du carburant ou aux déformées de la structure dans laquelle sont montés lesdits tubes et en évitant l'usage de raccords isolants de structure complexe.

A cet effet, le tube pour la circulation d'un fluide inflammable, destiné à être monté dans une structure, réalisée au moins partiellement en matériau électriquement isolant, susceptible d'être soumise à des perturbations électriques d'origine atmosphérique, ledit tube comportant deux embouts de jonction et un corps, est caractérisé en ce que, les embouts de jonction étant réalisés en matériau électriquement conducteur, le corps de tube, dont au moins la face interne est électriquement conductrice sur la plus grande partie de sa longueur, présente au moins un tronçon électriquement isolant.

Ainsi, l'invention permet de créer, dans le tube, au moins une zone locale non conductrice, ce qui évite à la tuyauterie de circulation du fluide inflammable, notamment du carburant, de constituer un conducteur continu pour les courants de foudre. Par ailleurs, la plus grande partie du tube est conductrice et peut être reliée aux zones conductrices de la structure, ou d'une structure voisine, pour drainer l'électricité statique.

Selon un premier exemple de réalisation de l'invention, le corps de tube est réalisé en matériau électriquement isolant, et la face interne dudit corps comporte deux éléments électriquement conducteurs, séparés, et reliés, respectivement, auxdits embouts.

En particulier, lesdits éléments conducteurs sont disposés symétriquement par rapport à un tronçon central, électriquement isolant, du corps de tube.

Selon un second exemple de réalisation de l'invention, le corps de tube est constitué de deux tronçons d'extrémité réalisés en matériau électriquement conducteur et reliés à un tronçon intermédiaire électriquement isolant.

En particulier, ledit tronçon intermédiaire est constitué de deux manchons isolants, dont l'un est disposé intérieurement auxdits tronçons d'extrémité, et l'autre extérieurement.

Selon d'autres caractéristiques de l'invention, ledit matériau électriquement isolant est un matériau composite, et les parties dudit tube réalisées en matériau électriquement conducteur sont reliées à la masse.

Les figures du dessin annexé feront bien comprendre comment l'invention peut être réalisée. Sur ces figures, des références identiques désignent des éléments semblables.

La figure 1 est une vue en perspective schématique d'un caisson en matériau composite formant réservoir de carburant de, par exemple, un aéronef.

La figure 2 est une vue partielle schématique en coupe du caisson de la figure 1.

La figure 3 est une vue en coupe longitudinale d'un premier exemple de réalisation du tube selon l'invention.

La figure 4 est une vue agrandie du détail A de la figure 3.

La figure 5 illustre un assemblage de tubes de la figure 3.

La figure 6 est une vue en coupe longitudinale d'un second exemple de réalisation du tube selon l'invention.

La figure 7 illustre un assemblage de tubes de la figure 6.

Dans le caisson 1 formant, par exemple, réservoir de carburant d'un aéronef, est montée une tuyauterie 2 du circuit de carburant, constituée d'une pluralité de tubes élémentaires 3 reliés les uns aux autres par des jonctions 4.

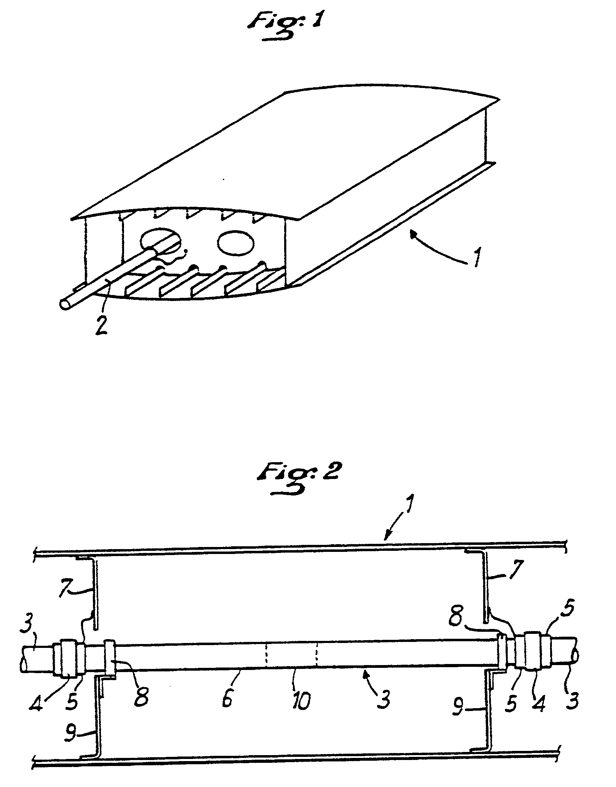

En se référant à la figure 2, le tube 3 comporte deux embouts métalliques 5 et un corps 6. Les embouts métalliques 5 sont, chacun, reliés à des organes conducteurs 7 du caisson 1, et, de même, les brides de fixation 8 du tube 3 sont reliées à des supports conducteurs 9.

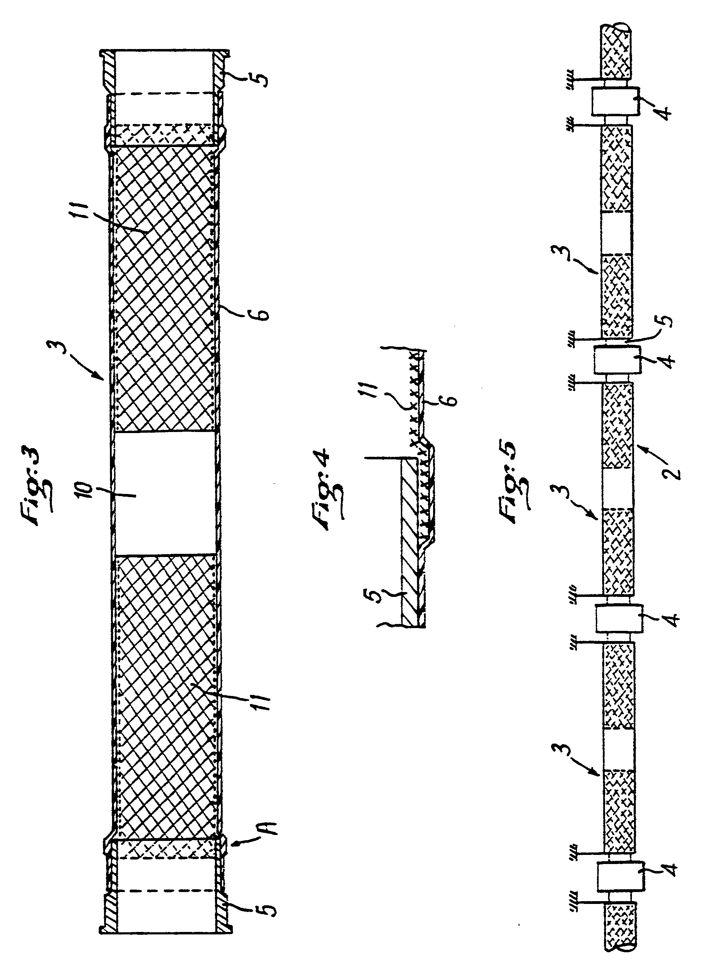

Le corps 6 du tube, dont au moins la face interne est électriquement conductrice sur la plus grande partie de sa longueur, présente un tronçon 10 électriquement isolant, comme cela est expliqué plus en détail ci-dessous en référence aux figures 3 à 7 illustrant deux exemples de réalisation du tube de l'invention. On note que l'on peut prévoir sur le caisson 1 une métallisation externe.

En se référant aux figures 3 à 5 illustrant un premier exemple de réalisation du tube selon l'invention, le corps 6 du tube est réalisé en matériau composite isolant et résistant à partir de fibres imprégnées de résine (fibres : verre, aramides, ou analogues, résine : époxy, phénolique, polyester, bismaléimide, ou analogue).

Le corps de tube 6 assure la fonction de résistance aux efforts mécaniques. Il se termine, à chaque extrémité, par un embout métallique 5, qui permet d'utiliser tous les systèmes connus de jonction de tuyauterie pour la circulation de carburant.

Le drainage de l'électricité statique est obtenu par des éléments électriquement conducteurs 11 placés sur la face interne du tube, c'est-à-dire la face en contact avec le carburant qui circule à grande vitesse. Chaque élément conducteur 11, qui peut être constitué par un grillage métallique, une feuille de métal, un dépôt métallique, un réseau de fils ou un fil en spirale, est relié électriquement à un embout métallique 5 respectif, soit par simple contact, soit par sertissage ou soudure (figure 4).

Les éléments conducteurs 11 sont séparés l'un de l'autre, ce qui permet de conserver un tronçon central isolant 10 du corps de tube 6. La longueur de ce tronçon sera déterminée en fonction de deux critères. La longueur non conductrice doit être suffisante pour éviter l'apparition d'arcs de décharge. En effet, certaines conditions de foudroiement peuvent entraîner des différences de potentiel importantes entre les deux éléments conducteurs. Par ailleurs, cette distance doit être assez courte pour ne pas donner naissance à des phénomènes dangereux liés à la présence de charges statiques.

Ainsi, le drainage de l'électricité statique est effectué sur la majeure partie de la tuyauterie 2 du circuit de circulation du carburant, et l'évacuation des charges statiques est assurée par mise à la masse de chaque embout 5 (figure 5). L'espace entre les éléments conducteurs 11 dans la zone centrale de chaque tube 3 empêche le circuit de circulation du carburant de se comporter comme un conducteur électrique continu drainant les courants de grande intensité, comme celui de la foudre.

Le tube selon ce premier exemple de réalisation de l'invention peut être fabriqué de la façon suivante.

On place sur un mandrin les deux embouts métalliques qui ont subi les traitements de surface appropriés pour le collage et la protection contre la corrosion. Chaque élément conducteur métallique est alors disposé de façon qu'il recouvre partiellement l'embout correspondant.

Le matériau composite, constitué de fibres imprégnées de résine, est ensuite déposé, soit sous forme de nappes unidirectionnelles croisées, soit sous forme de tissus, enroulés sur l'ensemble de mandrin, soit par bobinage d'un fil ou d'une nappe de faible largeur. L'utilisation d'un mat de fibres (fibres non alignées) imprégné à la pose est également possible. Un recouvrement partiel de l'embout par l'extrémité du corps de tube en matériau composite permet d'assurer, par collage, le transfert des efforts mécaniques entre le corps de tube et les embouts.

Bien entendu, le nombre de couches déposées et leur orientation dépendent des efforts mécaniques à tenir.

L'ensemble est alors polymérisé et on obtient, dans la même opération, le durcissement de la résine du matériau composite, et le collage du corps de tube sur les embouts.

L'utilisation d'un matériau composite à performances élevées permet de réaliser une tuyauterie résistante plus légère que celles réalisées en métal. Le choix d'une fibre à bas module d'élasticité permet de plus de réaliser une tuyauterie souple qui suit les déformées de la structure dans laquelle elle est montée. Par ailleurs, la métallisation partielle de la face interne du corps de tube permet le drainage de l'électricité statique engendrée dans le carburant tout en évitant au circuit de circulation du carburant d'offrir un cheminement privilégié pour les courants de foudre.

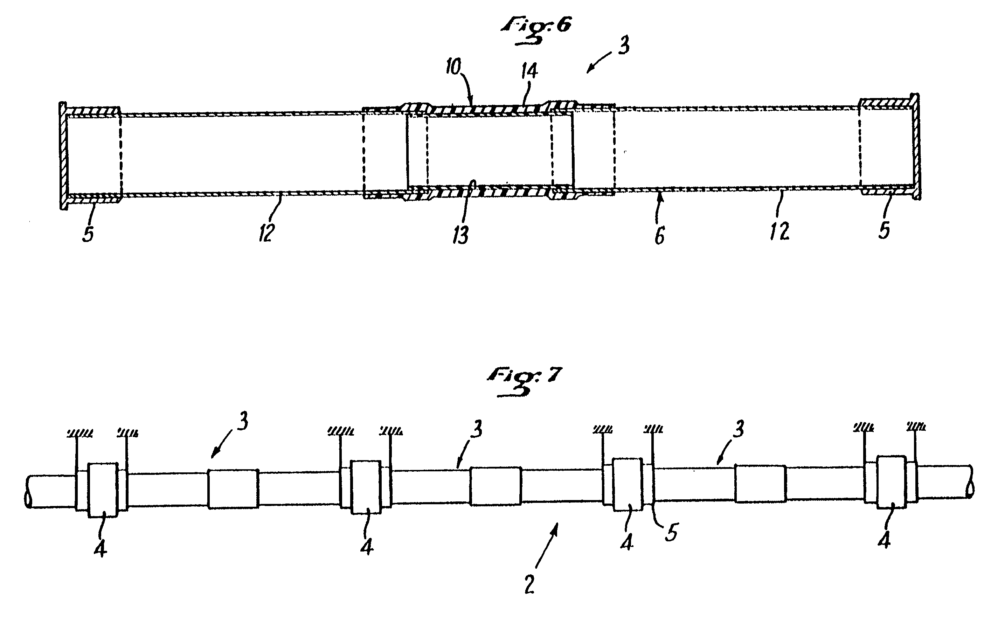

En se référant aux figures 6 et 7 illustrant un second exemple de réalisation de l'invention, le tube est constitué de :

— deux embouts métalliques 5 qui permettent la jonction du tube 3 à des tubes voisins,

— deux tronçons d'extrémité métalliques 12, soudés, sertis ou intégrés aux embouts métalliques 5, et

— d'un tronçon intermédiaire 10 en matériau composite isolant et résistant, qui peut être un matériau tel que ceux indiqués précédemment.

Le tronçon intermédiaire 10 est constitué d'un manchon interne 13 en matériau composite isolant, polymérisé au préalable, qui vient s'emmancher dans les deux tronçons d'extrémité, et d'un manchon externe 14, également en matériau composite isolant, qui vient coiffer le manchon interne 13 et, partiellement, les deux tronçons métalliques d'extrémité 12.

Cette conception, d'un coût de fabrication réduit, satisfait également aux exigences demandées pour le circuit de carburant : étanchéité, résistance, protection contre la foudre, drainage de l'électricité statique.

## Revendications

1. Tube pour la circulation d'un fluide inflammable, destiné à être monté dans une structure, réalisée au moins partiellement en matériau électriquement isolant, susceptible d'être soumise à des perturbations électriques d'origine atmosphérique, ledit tube (3) comportant deux embouts de jonction (5) et un corps (6), caractérisé en ce que, les embouts de jonction (5) étant réalisés en matériau électriquement conducteur, le corps de tube (6), dont au moins la face interne est électriquement conductrice sur la plus grande partie de sa longueur, présente au moins un tronçon électriquement isolant (10).

2. Tube selon la revendication 1, caractérisé en ce que le corps de tube (6) est réalisé en matériau électriquement isolant, et en ce que la face interne dudit corps (6) comporte deux éléments électriquement conducteurs (11), séparés, et reliés, respectivement, auxdits embouts (5).

3. Tube selon la revendication 2, caractérisé en ce que lesdits éléments conducteurs (11) sont disposés symétriquement par rapport à un tronçon central (10), électriquement isolant, du corps de tube (6).

4. Tube selon la revendication 1, caractérisé en ce que le corps du tube (6) est constitué de deux tronçons d'extrémité (12) réalisés en matériau électriquement conducteur et reliés à un tronçon intermédiaire (10) électriquement isolant.

5. Tube selon la revendication 4, caractérisé en ce que ledit tronçon intermédiaire (10) est constitué de deux manchons isolants, dont l'un (13) est disposé intérieurement auxdits tronçons d'extrémité (12) et l'autre (14) extérieurement.

6. Tube selon l'une quelconque des revendications précédentes, caractérisé en ce que ledit matériau électriquement isolant est un matériau composite.

7. Tube selon l'une quelconque des revendications précédentes, caractérisé en ce que les parties dudit tube (5, 12) réalisées en matériau électriquement conducteur sont reliées à la masse.

8. Tuyauterie, caractérisée en ce qu'elle comprend une pluralité de tubes, reliés les uns aux autres, selon l'une quelconque des revendications précédentes.

## Patentansprüche

1. Durchflußrohr für eine brennbare Flüssigkeit, das dazu bestimmt ist, in eine wenigstens teilweise aus einem elektrisch isolierenden Werkstoff bestehende Struktur eingebaut zu werden, und das geeignet ist, elektrischen Störungen atmosphärischen Ursprungs unterworfen zu werden, wobei das Rohr (3) zwei Verbindungs-Endstücke (5) und einen Rohrkörper (6) aufweist, dadurch gekennzeichnet, daß die Verbindungs-Endstücke (5) aus einem elektrisch leitenden Werkstoff bestehen, und der Rohrkörper (6), der zumindest an seiner Innenoberfläche auf dem größten Teil seiner Länge elektrisch leitend ist, wenigstens einen elektrisch isolierenden Abschnitt (10) aufweist.

2. Rohr nach Anspruch 1, dadurch gekennzeichnet, daß der Rohrkörper (6) aus einem elektrisch isolierenden Werkstoff besteht und daß die Innenoberfläche des Rohrkörpers (6) zwei voneinander getrennte elektrisch leitende Elemente (11) aufweist, die jeweils mit den entsprechenden Verbindungs-Endstücken (5) verbunden sind.

3. Rohr nach Anspruch 2, dadurch gekennzeichnet, daß die leitenden Elemente (11) bezüglich eines elektrisch isolierenden Mittelabschnitts (10) des Rohrkörpers (6) symmetrisch angeordnet sind.

4. Rohr nach Anspruch 1, dadurch gekennzeichnet, daß der Rohrkörper (6) aus zwei aus einem elektrisch leitenden Werkstoff bestehenden und mit einem elektrisch isolierenden Zwischenabschnitt (10) verbundenen Endabschnitten (12) besteht.

5. Rohr nach Anspruch 4, dadurch gekennzeichnet, daß der Zwischenabschnitt (10) aus zwei isolierenden Hülsen besteht, von denen eine (13) innen und die andere (14) außen an den Endabschnitten (12) angeordnet ist.

6. Rohr nach einem der vorhergehenden Ansprüche, dadurch gekennzeichnet, daß der elektrisch isolierende Werkstoff ein zusammengesetzter Werkstoff ist.

7. Rohr nach einem der vorhergehenden Ansprüche, dadurch gekennzeichnet, daß die aus einem elektrisch leitenden Werkstoff bestehenden Teile (5, 12) des Rohres an die Masse angeschlossen sind.

8. Leitung, dadurch gekennzeichnet, daß sie mehrere miteinander verbundene Rohre nach einem der vorhergehenden Ansprüche umfaßt.

## Claims

1. Tube for the circulation of a flammable fluid, adapted to be mounted in a structure, made at least partially of electrically insulating material, capable of being subjected to electrical disturbances of atmospheric origin, said tube (3) comprising two joint endpieces (5) and a body (6), characterized in that, said joint endpieces (5) being made of electrically conductive material, the tube body (6), of which at least the inner face is electrically conductive over the major part of its length, presents at least one electrically insulating section (10).

2. Tube according to claim 1, characterized in that the tube body (6) is made of an electrically insulating material, and in that the inner face of said body (6) comprises two electrically conductive, separate elements (11), connected to said endpieces (5), respectively.

3. Tube according to claim 2, characterized in that said conductive elements (11) are disposed symmetrically with respect to an electrically insulating, central section (10) of the body (6) of the tube.

4. Tube according to claim 1, characterized in that the tube body (6) is constituted by two end sections (12) made of electrically conductive material and connected to an electrically insulating, intermediate section (10).

5. Tube according to claim 4, characterized in that said intermediate section (10) is constituted by two insulating sleeves, of which one (13) is disposed inside said end sections (12), and the other (14), outside.

6. Tube according to any one of the preceding claims, characterized in that said electrically insulating material is a composite material.

7. Tube according to any one of the preceding claims, characterized in that the parts of said tube (5, 12) made of electrically conductive material are grounded.

8. Conduit, characterized in that it comprises a plurality of tubes, connected to one another, according to any one of the preceding claims.

*Fig. 1*

*Fig. 2*

EP 0 297 990 B1

## Fig. 3

## Fig. 4

## Fig. 5

Fig.6

Fig.7